# EUROPEAN PATENT APPLICATION

(11) **EP 4 664 562 A1**
(43) Date of publication of application: **17.12.2025**
(21) Application number: 23931420.6
(22) Date of filing: 06.04.2023
(51) Int. Cl.: H01M 4/62, H01M 4/64, H01M 4/36, H01M 10/0525

(54) **POSITIVE ELECTRODE SHEET AND PREPARATION METHOD THEREFOR, BATTERY CELL, BATTERY, AND ELECTRIC DEVICE**

(71) Applicant: Contemporary Amperex Technology Co., Limited, Ningde, Fujian 352100 (CN)
(72) Inventor: LI, Jingru, Ningde, Fujian 352100 (CN); SHI, Songjun, Ningde, Fujian 352100 (CN); LAI, Youlei, Ningde, Fujian 352100 (CN); JIN, Haizu, Ningde, Fujian 352100 (CN); YU, Honggang, Ningde, Fujian 352100 (CN); ZHAO, Zimeng, Ningde, Fujian 352100 (CN); XING, Ke, Ningde, Fujian 352100 (CN); CHEN, Xiangbin, Ningde, Fujian 352100 (CN)
(74) Representative: Lorenz Seidler Gossel Part. mbB
(86) International application number: PCT/CN2023/086698
(87) International publication number: WO 2024/207352

(57) **Abstract**

Provided are a positive electrode plate and a preparation method therefor, a battery cell, a battery, and an electrical apparatus, belonging to the technical field of batteries. The positive electrode plate includes: a positive electrode current collector, a first film layer, a second film layer, and a third film layer, where the third film layer is located between the first film layer and the second film layer, the first film layer is located on a surface of at least one side of the positive electrode current collector and is closer to the positive electrode current collector than the second film layer; the first film layer includes a first active material, and the first active material includes a layered structure material; the second film layer includes a second active material, and the second active material includes at least one of an olivine structure material and a spinel structure material; and the third film layer is used for isolating the first active material from the second active material. The technical solutions in the embodiments of the present application are beneficial to enhancing the performance of the battery cell.

## Description

### TECHNICAL FIELD

The present application relates to the technical field of batteries, and in particular, to a positive electrode plate and a preparation method therefor, a battery cell, a battery and an electrical apparatus.

### BACKGROUND

In recent years, ion batteries are increasingly widely applied in energy storage power systems, such as water, fire, wind, and solar power stations, as well as many fields, such as electric tools, electric bicycles, electric motorcycles, electric vehicles, military equipment, and aerospace.

As a component of a battery cell, the performance of a positive electrode plate is essential for the performance of the battery cell. Therefore, how to provide a positive electrode plate to improve the performance of the battery cell is a technical problem that needs to be solved urgently.

### SUMMARY OF THE INVENTION

The present application is conducted in view of the above issues, and aims to provide a positive electrode plate, to improve the performance of a battery cell.

To achieve the above purpose, the present application provides a positive electrode plate and a preparation method therefor, a battery cell, a battery, and an electrical apparatus.

In a first aspect, a positive electrode plate is provided, including: a positive electrode current collector, a first film layer, a second film layer, and a third film layer, where the third film layer is located between the first film layer and the second film layer, the first film layer is located on a surface of at least one side of the positive electrode current collector and is closer to the positive electrode current collector than the second film layer; the first film layer includes a first active material, and the first active material includes a layered structure material; the second film layer includes a second active material, and the second active material includes at least one of an olivine structure material and a spinel structure material; and the third film layer is used for isolating the first active material from the second active material.

An embodiment of the present application provides a positive electrode plate, including a positive electrode current collector, a first film layer, a second film layer and a third film layer. A first active material in the first film layer includes a layered structure material. A second active material in the second film layer includes at least one of an olivine structure material and a spinel structure material. The first film layer is located on a surface of at least one side of the positive electrode current collector and is closer to the positive electrode current collector than the second film layer. In this way, the battery cell may have relatively high energy density and reliability. The third film layer is located between the first film layer and the second film layer, and the third film layer is used for isolating the first active material from the second active material, which may reduce a risk of contact between the first active material and the second active material, thereby mitigating the impact of performance differences between the first active material and the second active material on performance of the battery cell. Therefore, according to the technical solution in the embodiment of the present application, the performance of the battery cell may be improved.

In an possible implementation, the third film layer includes a conductive agent and a binder. In this way, the third film layer is conductive, and the first film layer and the second film layer may be conductive through the third film layer. The third film layer may be bonded to the first film layer and the second film layer, which may reduce a risk of deformation and wrinkling of the positive electrode plate.

In a possible implementation, the third film layer includes an oxygen-absorbing material, and the oxygen-absorbing material is used for absorbing oxygen generated by the first active material.

In the above technical solutions, the first active material includes the layered structure material, and during use of the battery cell, the first active material may generate oxygen. By arranging the oxygen-absorbing material in the third film layer, at least part of the oxygen generated by the first active material may be absorbed. In this way, the content of the oxygen in the battery cell may be reduced, thereby slowing down the occurrence of side reactions, reducing total gas production of the battery cell, improving reliability of the battery cell, and being beneficial to improving the performance of the battery cell, such as reducing impedance of the battery cell and improving cycling performance of the battery cell.

In a possible implementation, the oxygen-absorbing material includes a porous material. The porous material has a porosity of 60% to 95%, and a specific surface area of 1000 m²/g to 5000 m²/g. Optionally, the porous material has a porosity of 70% to 80%, and a specific surface area of 2000 m²/g to 4000 m²/g. In this way, oxygen may be adsorbed in the porous material, which may reduce adverse effects of th oxygen on the performance of the battery cell.

In a possible implementation, the porous material includes: at least one of a carbon-based material and a molecular sieve material. Optionally, the carbon-based material includes: activated carbon. Optionally, the molecular sieve material includes: at least one of a carbon molecular sieve, a zeolite molecular sieve, and a silicon-titanium molecular sieve. In this way, the porous material may be flexibly arranged according to actual conditions.

In a possible implementation, the oxygen-absorbing material includes at least one of a phenolic antioxidant and an amine antioxidant. Optionally, the phenolic antioxidant includes at least one of butylated hydroxyanisole, butylated hydroxytoluene, propyl gallate, and tert-butylhydroquinone. Optionally, the amine antioxidant includes at least one of naphthylamine, diphenylamine, and p-phenylenediamine.

In a possible implementation, based on a total weight of the third film layer, a weight percentage of the oxygen-absorbing material is 10wt% to 80wt%, and optionally 30wt% to 60wt%.

In the above technical solutions, when the mass ratio of the oxygen-absorbing material to the third film layer is not less than 10wt%, it is beneficial to absorbing more oxygen through the third film layer. When the mass ratio of the oxygen-absorbing material to the third film layer is not greater than 80wt%, it is beneficial to arranging more conductive agent and binder in the third film layer, thereby being beneficial to improving conductivity and bonding performance of the third film layer. The mass ratio of the oxygen-absorbing material to the third film layer is 10wt% to 80wt%, which is beneficial to improving comprehensive performance of the third film layer, and giving consideration to oxygen absorption capacity, conductivity and bonding performance of the third film layer. The mass ratio of the oxygen-absorbing material to the third film layer is 30wt% to 60wt%, which is beneficial to absorbing more oxygen through the third film layer, mitigating the impact of oxygen on the performance of the battery cell, and meanwhile is beneficial to arranging suitable conductive agent and binder in the third film layer, to improve the comprehensive performance of the third film layer.

In a possible implementation manner, the olivine structure material includes lithium-containing phosphate with an olivine structure. Optionally, the lithium-containing phosphate with the olivine structure includes Li_{c}Fe_{d}M¹_{1-d}P₁₋ₘO₄₋ₙ, where 0≤c≤1.1, 0.3≤d≤1, 0≤m≤0.1, and 0≤n≤0.1, and M¹ includes at least one of Mn, Al, Cu, Mg, Zn, Ni, Ti, V, Zr, Co, Ga, Sn, Sb, Nb, and Ge. Optionally, the Li_{c}Fe_{d}M¹_{1-d}P₁₋ₘO₄₋ₙ includes at least one of LiFePO₄, LiMnPO₄, and LiFe_{0.5}Mn_{0.5}PO₄. In this way, the second active material has relatively high stability, thereby being beneficial to improving the reliability of the battery cell.

In a possible implementation, the spinel structure material includes at least one of LiMn₂O₄ and LiNiₑMn₂₋ₑO₄, where 0<e<2. In this way, it is beneficial to improving the reliability of the battery cell.

In a possible implementation, the layered structure material includes a lithium transition metal oxide with a layered structure. Optionally, the lithium transition metal oxide includes at least one of LiCoO₂, LiMnO₂, LiNiO₂, LiₐNiₓCo_{y}M²_{1-x-y}O_{2+b}, nLi₂MnO₃·(1-n)LiM³O₂, where 0.5≤x<1.0, 0≤y< 0.5, x+y<1, 0.2≤a≤1.2,-0.02≤b<0.02, 0<n<1, M² includes at least one of Mn, Zr, Al, B, Ta, Mo, W, Nb, Sb, and La, and M³ includes at least one of Co, Ni, and Mn. Optionally, the lithium transition metal oxide includes at least one of LiNi_{0.6}Co_{0.2}Mn_{0.2}O₂, LiNi_{0.5}Co_{0.2}Mn_{0.3}O₂, and Li_{1.2}Ni_{0.34}Co_{0.13}Mn_{0.13}O₂. In this way, the first active material has a higher gram volume, which is beneficial to improving the energy density of the battery cell.

In a possible implementation, based on a total weight of the third film layer, a weight percentage of the binder in the third film layer is 1wt% to 20wt%. In this way, a risk of decrease in an electrolyte solution absorption rate of the third film layer due to a large amount of binder may be reduced, thereby being beneficial to improving a liquid absorption rate of the positive electrode plate and further improving production efficiency of the battery cell. Optionally, the weight percentage of the binder in the third film layer is 5wt% to 15wt%. In this way, it is beneficial to bonding between the third film layer and each of the first film layer and the second film layer, and the possibility of a gap between the third film layer and the first film layer or the second film layer may be reduced, thereby reducing a risk of deformation and wrinkling of the positive electrode plate.

In a possible implementation, based on the total weight of the third film layer, a weight percentage of the conductive agent in the third film layer is 10wt% to 80wt%, and optionally 40wt% to 60wt%. In this way, the third film layer has a certain conductivity, and the battery cell has relatively low internal resistance, and meanwhile, a mass proportion of the conductive agent in the third film layer is appropriate, which is beneficial to reducing a thickness of the third film layer, thereby being beneficial to improving the energy density of the battery cell.

In a possible implementation, a thickness d3 of the third film layer is 1 µm to 10 µm, and optionally 3 µm to 7 µm. In this way, it is beneficial to improving an isolation effect between the first active material and the second active material, and may also reduce a decrease in the energy density of the battery cell caused by an excessive thickness of the third film layer.

In a possible implementation, a thickness d1 of the first film layer is 40 µm to 160 µm, and optionally 60 µm to 140 µm. In this way, properly setting the thickness of the first film layer is beneficial to giving consideration to the energy density and the reliability of the battery cell.

In a possible implementation, a thickness d2 of the second film layer is 40 µm to 160 µm, and optionally 60 µm to 140 µm. In this way, properly setting the thickness of the second film layer is beneficial to giving consideration to the energy density and the reliability of the battery cell.

In a possible implementation, based on a total weight of the first film layer, a weight percentage of the first active material is 90wt% to 98wt%, and optionally 96wt% to 97wt%; and/or, based on a total weight of the second film layer, a weight percentage of the second active material is 90wt% to 98wt%, and optionally 96wt% to 97wt%.

In the above technical solution, properly setting the mass ratio of the first active material to the first film layer is beneficial to improving comprehensive performance of the first film layer, and is beneficial to balancing the energy density and reliability of the battery cell as well as conductivity and bonding power of the first film layer. Properly setting the mass ratio of the second active material to the second film layer is beneficial to improving comprehensive performance of the second film layer, and is beneficial to balancing the energy density and reliability of the battery cell as well as conductivity and bonding power of the second film layer.

In a possible implementation, based on the total weight of the first film layer, a weight percentage of the conductive agent in the first film layer is 0.1wt% to 1wt%, and optionally 0.3wt% to 0.6wt%; and/or, based on the total weight of the second film layer, a weight percentage of the conductive agent in the second film layer is 0.1wt% to 1wt%, and optionally 0.3wt% to 0.6wt%.

In the above technical solution, properly setting the content of the conductive agent in the first film layer is beneficial to giving consideration to the conductivity and bonding performance of the first film layer as well as the energy density and reliability of the battery cell. Properly setting the content of the conductive agent in the second film layer is beneficial to giving consideration to the conductivity and bonding performance of the second film layer as well as the energy density of the battery cell.

In a possible implementation, the conductive agent includes at least one of superconducting carbon, conductive carbon black, Ketjen black, carbon dots, and carbon fibers. In this way, a type of the conductive agent can be flexibly selected according to actual conditions.

In a possible implementation, based on the total weight of the first film layer, a weight percentage of the binder in the first film layer is 1wt% to 2wt%, and optionally 1.2wt% to 1.4wt%; and/or, based on the total weight of the second film layer, a weight percentage of the binder in the second film layer is 1wt% to 2wt%, and optionally 1.2wt% to 1.4wt%.

In the above technical solution, properly setting the content of the binder in the first film layer is beneficial to improving bonding power between the first film layer and the third film layer or the positive electrode current collector, reducing a risk of wrinkling of the positive electrode plate, and meanwhile is further beneficial to giving consideration to the conductivity of the first film layer as well as the energy density and reliability of the battery cell. Properly setting the content of the binder in the second film layer is beneficial to improving bonding power between the second film layer and the third film layer, reducing a risk of wrinkling of the positive electrode plate, and meanwhile is further beneficial to giving consideration to the conductivity of the second film layer as well as the energy density of the battery cell.

In a possible implementation, the binder includes: at least one of polyvinylidene fluoride, styrene polybutadiene rubber, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, vinylidene fluoride-hexafluoropropylene copolymer, vinylidene fluoride-trichloroethylene copolymer, fluorine-containing acrylic resin, polyacrylonitrile, polyvinyl pyrrolidone, polyvinyl acetate, polyethylene-co-vinyl acetate, polyethylene oxide, and polyarylate. In this way, a type of the binder can be flexibly selected according to actual conditions.

In a second aspect, a preparation method for a positive electrode plate is provided, including: providing a positive electrode current collector, a first film layer, a second film layer, and a third film layer, where the third film layer is located between the first film layer and the second film layer, and the first film layer is located on a surface of at least one side of the positive electrode current collector and is closer to the positive electrode current collector than the second film layer; the first film layer includes a first active material, and the first active material includes a layered structure material; the second film layer includes a second active material, and the second active material includes at least one of an olivine structure material and a spinel structure material; and the third film layer is used for isolating the first active material from the second active material. The positive electrode plate prepared by the method is beneficial to improving the performance of a battery cell when applied to the battery cell.

In a third aspect, a battery cell is provided, including the positive electrode plate in the first aspect and any of the possible implementations thereof.

In a fourth aspect, a battery is provided, including the battery cell according to the third aspect.

In a fifth aspect, an electrical apparatus is provided, including the battery according to the fourth aspect.

An embodiment of the present application provides a positive electrode plate, including a positive electrode current collector, a first film layer, a second film layer and a third film layer. A first active material in the first film layer includes a layered structure material. A second active material in the second film layer includes at least one of an olivine structure material and a spinel structure material. The first film layer is located on a surface of at least one side of the positive electrode current collector and is closer to the positive electrode current collector than the second film layer. In this way, the battery cell may have relatively high energy density and reliability. The third film layer is located between the first film layer and the second film layer, and the third film layer is used for isolating the first active material from the second active material, which may reduce a risk of contact between the first active material and the second active material, thereby mitigating the impact of performance differences between the first active material and the second active material on performance of the battery cell. Therefore, according to the technical solution in the embodiment of the present application, the performance of the battery cell may be improved.

### BRIEF DESCRIPTION OF THE DRAWINGS

FIG. 1 is a schematic diagram of a positive electrode plate according to an embodiment of the present application;
FIG. 2 is a schematic diagram of a positive electrode plate according to an embodiment of the present application;
FIG. 3 is a schematic diagram of a preparation method for a positive electrode plate according to an embodiment of the present application;
FIG. 4 is a schematic diagram of a battery cell according to an embodiment of the present application;
FIG. 5 is a schematic diagram of a battery module according to an embodiment of the present application;
FIG. 6 is a schematic diagram of a battery according to an embodiment of the present application; and
FIG. 7 is a schematic diagram of an electrical apparatus according to an embodiment of the present application.

### DETAILED DESCRIPTION

Embodiments of a positive electrode plate and a preparation method therefor, a battery cell, a battery, and an electrical apparatus of the present application are specifically disclosed below with appropriate reference to the detailed description of the drawings. However, unnecessary detailed description will be omitted in some cases. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. Additionally, when it is stated that a certain parameter is an integer of ≥2, it is equivalent to disclosing that the parameter is, for example, an integer of 2, 3, 4, 5, 6, 7, 8, 9, 10, 11, or 12.

Unless otherwise specified, all the embodiments and optional embodiments of the present application can be combined with each other to form new technical solutions.

Unless otherwise specifically stated, all the technical features and optional technical features of the present application can be combined with one another to form new technical solutions.

If not specifically stated, all steps of the present application may be performed sequentially or randomly, preferably sequentially. For example, the method includes steps (a) and (b), indicating that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specifically stated, the "including" and "comprising" mentioned in the present application mean open-ended, or may be closed-ended. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is satisfied by any one of the following conditions: A is true (or present) and B is false (or absent); A is false (or absent) and B is true (or present); or both A and B are true (or present).

Lithium-ion batteries are widely used in mobile phones, electric vehicles, power stations and other fields due to their high energy density, high voltage and long service life. As a component of a battery cell, the performance of a positive electrode plate is essential for the performance of the battery cell.

The positive electrode plate includes a positive electrode current collector and a film layer coated on a surface of the positive electrode current collector. The active material in the film layer is usually lithium iron phosphate with an olivine structure or a ternary material with a layered structure. When the film layer in the positive electrode plate only includes the lithium iron phosphate active material, although a battery cell prepared from the positive electrode plate has relatively high reliability, the battery cell has relatively low energy density. When the film layer in the positive electrode plate only includes the ternary active material, although a battery cell prepared from the positive electrode plate has relatively high energy density, the battery cell has relatively low reliability.

The film layer containing the ternary material and the film layer containing the lithium iron phosphate material are respectively coated on the positive electrode current collector in sequence. When the obtained positive electrode plate is applied to a battery cell, the battery cell has relatively high energy density and reliability. However, the ternary material and the lithium iron phosphate material has a great performance difference, thereby having adverse effects on the performance of the battery cell.

In view of this, an embodiment of the present application provides a positive electrode plate, including a positive electrode current collector, a first film layer, a second film layer, and a third film layer. A first active material in the first film layer includes a layered structure material. A second active material in the second film layer includes at least one of an olivine structure material and a spinel structure material. The first film layer is located on a surface of at least one side of the positive electrode current collector and is closer to the positive electrode current collector than the second film layer. In this way, the battery cell may have relatively high energy density and reliability. The third film layer is located between the first film layer and the second film layer. The third film layer is used for isolating the first active material from the second active material, so that a risk of contact between the first active material and the second active material may be reduced, thereby mitigating the impact of performance differences between the first active material and the second active material on the performance of the battery cell.

### [Positive electrode plate]

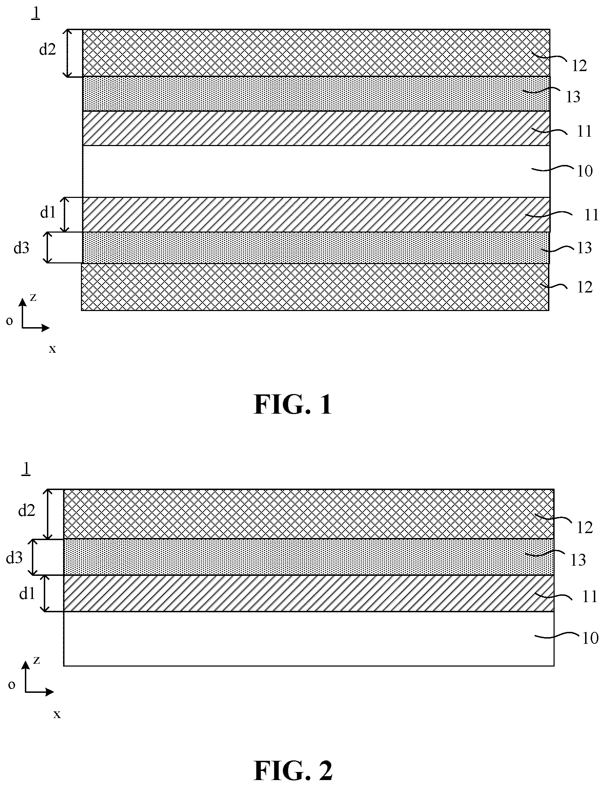

FIG. 1 is a schematic diagram of a positive electrode plate according to an embodiment of the present application. As shown in FIG. 1, a positive electrode plate 1 includes a positive electrode current collector 10, a first film layer 11, a second film layer 12 and a third film layer 13.

The third film layer 13 is located between the first film layer 11 and the second film layer 12. The first film layer 11 is located on a surface of at least one side of the positive electrode current collector 10 and is closer to the positive electrode current collector 10 than the second film layer 12. That is, along a thickness direction of the positive electrode plate 1, for example, a z direction in FIG. 1, the positive electrode current collector 10, the first film layer 11, the third film layer 13, and the second film layer 12 are arranged in sequence.

The positive electrode current collector 10 has two surfaces arranged along a thickness direction thereof. The first film layer 11, the third film layer 13, and the second film layer 12 are arranged on the surface of the same side of the positive electrode current collector 10. Optionally, as shown in FIG. 1, the first film layer 11, the third film layer 13, and the second film layer 12 are arranged on both surfaces of the positive electrode current collector 10.

FIG. 2 is a schematic diagram of a positive electrode plate according to an embodiment of the present application. In some other embodiments, as shown in FIG. 2, a first film layer 11, a third film layer 13, and a second film layer 12 are arranged on one of two opposite surfaces of a positive electrode current collector 10 in a thickness direction.

The first film layer 11 includes a first active material, and the first active material includes a layered structure material.

The second film layer 12 includes a second active material, and the second active material includes at least one of an olivine structure material and a spinel structure material.

The first film layer 11 is closer to the positive electrode current collector 10 than the second film layer 12. That is, the first active material is closer to the positive electrode current collector 10 than the second active material, and the second active material is farther from the positive electrode current collector 10 than the first active material. In this way, the battery cell has relatively high reliability, and a lower probability of fire and explosion.

The first active material and the second active material have different crystal structures, where the crystal structure may represent a spatial arrangement rule of atoms in the material. The layered structure material may refer to a material whose crystal structure is a layered structure. The olivine structure material may refer to a material whose crystal structure is an olivine structure. The spinel structure material may refer to a material whose crystal structure is a spinel structure.

The olivine structure material has relatively high stability. When the olivine structure material is applied to a battery cell, a risk of fire and explosion of the battery cell under high temperature and other conditions may be reduced, which is beneficial to improving reliability of the battery cell. The olivine structure material may include a variety of materials, for example, LiFePO₄. For another example, the olivine structure material may include surface-modified lithium iron phosphate, for example, an outer surface of lithium iron phosphate is coated with a carbon material to improve conductivity of the material.

The spinel structure is a crystal structure of material. When the spinel structure material is applied to a battery cell, the battery cell has relatively high reliability, which is beneficial to reducing a risk of fire and explosion of the battery cell. The spinel structure material may include a variety of materials, for example, LiMn₂O₄.

The layered structure material has a relatively high gram volume, and may improve energy density of a battery cell when applied to the battery cell. The gram volume may refer to the ratio of electric quantity released by the active material to the mass of the active material. The layered structure material may include a variety of materials, for example, LiMO₂, where M includes at least one of Co, Ni, and Mn, for example, LiCoO₂, LiNi_{0.6}Co_{0.2}Mn_{0.2}O₂, and LiNi_{0.5}Co_{0.2}Mn_{0.3}O₂.

Optionally, the first active material and the second active material have different electrical resistivity and different particle sizes.

Optionally, the third film layer 13 does include the first active material and the second active material.

The third film layer 13 is used for isolating the first active material from the second active material. With arrangement of the third film layer 13, a risk of contact between the first active material and the second active material may be reduced, thereby mitigating the impact of performance differences between the first active material and the second active material on the performance of the battery cell.

For example, the first active material is LiCoO₂, and the second active material is LiFePO₄ having a carbon coating layer. The second active material attached to or coated on a surface of the first active material may cause electrons to be accumulated on a surface of the first active material. Accumulated electrons affect lithium ion extraction or intercalation in the second active material, thereby affecting cycling performance of the battery cell. With arrangement of the third film layer 13, the third film layer 13 isolates the first active material from the second active material. In this way, a risk of the second active material attached to or coated on the first active material may be reduced, and a phenomenon of electron accumulation on a surface of the second active material caused by a conductivity difference between the first active material and the second active material may be improved, thereby being beneficial to reducing a risk of accumulated electrons to lithium ion extraction or intercalation in the second active material, and is beneficial to improving the cycling performance of the battery cell.

The cycling performance of the battery cell may be measured by a capacity retention rate. The capacity retention rate is the ratio of a retained capacity to an initial discharge capacity. The retained capacity may refer to a discharge capacity of the battery cell after the battery cell completes a certain number of charge and discharge cycles. The initial discharge capacity may refer to a discharge capacity of the battery cell after the battery cell completes a first charge and discharge test.

Optionally, the positive electrode current collector 10 is aluminum foil, or may be a composite current collector made of metal and polymer materials.

An embodiment of the present application provides a positive electrode plate 1, including a positive electrode current collector 10, a first film layer 11, a second film layer 12 and a third film layer 13. A first active material in the first film layer 11 includes a layered structure material. A second active material in the second film layer 12 includes at least one of an olivine structure material and a spinel structure material. The first film layer 11 is located on a surface of at least one side of the positive electrode current collector 10 and is closer to the positive electrode current collector 10 than the second film layer 12. In this way, the battery cell may have relatively high energy density and reliability. The first film layer 11 is located on a surface of the positive electrode current collector 10. The third film layer 13 is located between the first film layer 11 and the second film layer 12. The third film layer 13 is used for isolating the first active material from the second active material. In this way, a risk of contact between the first active material and the second active material may be reduced, thereby mitigating the impact of performance differences between the first active material and the second active material on the performance of the battery cell. Therefore, according to the technical solution in the embodiment of the present application, the performance of the battery cell may be improved.

In some embodiments, the third film layer 13 includes a conductive agent and a binder.

Optionally, the third film layer 13 does include the active material, and only includes a conductive agent and a binder. That is, the third film layer 13 may be a porous film having a conductive agent and a binder.

In this embodiment, the third film layer 13 is conductive. The first film layer 11 and the second film layer 12 may be conductive through the third film layer 13. The third film layer 13 may be bonded to the first film layer 11 and the second film layer 12, which may reduce a risk of deformation and wrinkling of the positive electrode plate 1, and a risk of mutual separation of different film layers of the positive electrode plate 1.

In some embodiments, the third film layer 13 includes an oxygen-absorbing material, and the oxygen-absorbing material is used for absorbing oxygen generated by the first active material.

During a charge and discharge process of the battery cell, oxygen atoms in the first active material are easily released from the first film layer 11, leading to oxygen generation. Oxygen may intensify the occurrence of side reactions in the battery cell, for example, may catalyze reactions at a negative electrode interface, leading to an increase in internal resistance of the battery cell and a decrease in cycling performance of the battery cell.

The third film layer 13 includes an oxygen-absorbing material. The third film layer 13 is located between the first film layer 11 and the second film layer 12. After oxygen is released from the first film layer 11, the third film layer 13 may absorb at least part of the oxygen. In this way, the content of the oxygen in the battery cell may be reduced, thereby slowing down the occurrence of the side reactions, and being beneficial to improving the performance of the battery cell.

In some embodiments, the oxygen-absorbing material includes a porous material. The porous material has a porosity of 60% to 95%, and a specific surface area of 1000m²/g to 5000m²/g.

A porous material may refer to a material having a certain holes. For example, a material may be determined to be a porous material based on its porosity. In this embodiment of the present application, the porous material may refer to a material having a porosity of 60% to 95%.

On the one hand, the porous material has a suitable porosity, which is convenient for absorbing oxygen. On the other hand, the porous material has a suitable specific surface area, which may reduce a risk of oxygen escaping from the porous material after the oxygen is adsorbed in the porous material.

In this embodiment, the oxygen may be adsorbed in the porous material, which may reduce adverse effects of the oxygen on the performance of the battery cell.

Optionally, the porous material has a porosity of 70% to 80% and a specific surface area of 2000m²/g to 4000m²/g. In this way, it is beneficial to further reducing the risk of oxygen escaping from the porous material, thereby being beneficial to further improving the performance of the battery cell.

In some embodiments, the porous material includes: at least one of a carbon-based material and a molecular sieve material. Optionally, the carbon-based material includes: activated carbon. Optionally, the molecular sieve material includes: at least one of a carbon molecular sieve (CMS), a zeolite molecular sieve, and a silicon-titanium molecular sieve. In this way, the porous material may be flexibly arranged according to actual conditions.

In some embodiments. The oxygen-absorbing material includes at least one of a phenolic antioxidant and an amine antioxidant. Optionally, the phenolic antioxidant includes at least one of butylated hydroxyanisole (BHA), butylated hydroxytoluene (BHT), propyl gallate (PG), and tert-butylhydroquinone (TBHQ). Optionally, the amine antioxidant includes at least one of naphthylamine, diphenylamine, and p-phenylenediamine.

Optionally, the oxygen-absorbing material includes a phosphite organic substance, such as a phosphite antioxidant.

The above oxygen-absorbing material includes unstable groups or unstable chemical bonds. The oxygen-absorbing material may react with oxygen to consume the oxygen generated by the first active material. For example, phenolic antioxidants, amine antioxidants, or phosphite organic substances may capture oxygen free radicals to implement oxygen absorption.

Optionally, the oxygen-absorbing material may further include other materials with unstable groups or chemical bonds. The embodiments of the present application include, but are not limited to, the above materials.

In some embodiments, based on a total weight of the third film layer 13, a weight percentage of the oxygen-absorbing material is 10wt% to 80wt%.

When the mass ratio of the oxygen-absorbing material to the third film layer 13 is not less than 10wt%, it is beneficial to absorbing more oxygen through the third film layer 13. When the mass ratio of the oxygen-absorbing material to the third film layer 13 is not greater than 80wt%, it is beneficial to arranging more conductive agent and binder in the third film layer 13, thereby being beneficial to improving conductivity and bonding performance of the third film layer 13.

In this embodiment, the mass ratio of the oxygen-absorbing material to the third film layer 13 is 10wt% to 80wt%. In this way, it is beneficial to improving comprehensive performance of the third film layer 13, and giving consideration to the oxygen absorption capacity, conductivity and bonding performance of the third film layer 13.

Optionally, the mass ratio of the oxygen-absorbing material to the third film layer 13 is 30wt% to 60wt%. In this way, it is beneficial to absorbing more oxygen through the third film layer 13, and reducing the impact of the oxygen on the performance of the battery cell; and meanwhile, it is beneficial to arranging suitable conductive agent and binder in the third film layer 13, to improve the comprehensive performance of the third film layer 13.

In some embodiments, the olivine structure material includes lithium-containing phosphate with an olivine structure. Optionally, the lithium-containing phosphate with the olivine structure includes Li_{c}Fe_{d}M¹_{1-d}P₁₋ₘO₄₋ₙ, where 0≤c≤1.1, 0.3≤d≤1, 0≤m≤0.1, 0≤n≤0.1, and M¹ includes at least one of Mn, Al, Cu, Mg, Zn, Ni, Ti, V, Zr, Co, Ga, Sn, Sb, Nb, and Ge. For example, c is 0, 0.1, 0.3, 0.8, 1, 1.1, or any value within the above range, d is 0.3, 0.8, 1, or any value within the above range, m is 0, 0.05, 0.1, or any value within the above range, and n is 0, 0.05, 0.1, or any value within the above range, as long as the above conditions are satisfied.

Optionally, Li_{c}Fe_{d}M¹_{1-d}P₁₋ₘO₄₋ₙ includes at least one of LiFePO₄, LiMnPO₄, and LiFe_{0.5}Mn_{0.5}PO₄. In this way, the olivine structure material has relatively high stability, thereby being beneficial to improving the reliability of the battery cell.

In some embodiments, the spinel structure material includes at least one of LiMn₂O₄ and LiNiₑMn₂₋ₑO₄, where 0<e<2. For example, e is 0.5, 1, 1.5, or any value within the above range. The battery cell prepared from the spinel structure material has relatively high reliability, which is beneficial to reducing a probability of fire and explosion of the battery cell.

In some embodiments, the layered structure material includes a lithium transition metal oxide with a layered structure. Optionally, the lithium transition metal oxide with the layered structure includes at least one of LiCoO₂, LiMnO₂, LiNiO₂, LiₐNiₓCo_{y}M²_{1-x-y}O_{2+b}, nLi₂MnO₃·(1-n)LiM³O₂, where 0.5≤x<1.0, 0≤y< 0.5, x+y<1, 0.2≤a≤1.2, -0.02≤b< 0.02, 0<n<1, M² includes at least one of Mn, Zr, Al, B, Ta, Mo, W, Nb, Sb, and La, and M³ includes at least one of Co, Ni, and Mn. Optionally, the lithium transition metal oxide includes at least one of LiNi_{0.6}Co_{0.2}Mn_{0.2}O₂, LiNi_{0.5}Co_{0.2}Mn_{0.3}O₂, and Li_{1.2}Ni_{0.54}Co_{0.13}Mn_{0.13}O₂. For example, a is 0.2, 0.3, 0.8, 1, 1.2, or any value within the above range, b is -0.02, 0, 0.01, or any value within the above range, x is 0.5, 0.8, 0.9, or any value within the above range, y is 0, 0.1, 0.3, 0.4, or any value within the above range, and n is 0.2, 0.3, 0.5, 0.8, or any value within the above range, as long as the above conditions are met. The layered structure material has a relatively high gram volume, thereby being beneficial to improving energy density of the battery cell.

In some embodiments, LiₐNiₓCo_{y}M²_{1-x-y}O_{2+b} may be LiNi_{0.6}Co_{0.2}Mn_{0.2}O₂, LiNi_{0.5}Co_{0.3}Mn_{0.2}O₂, or LiNi_{0.5}Co_{0.3}Mn_{0.1}Al_{0.1}O₂. In some embodiments, nLi₂MnO₃·(1-n)LiM³O₂ may include Li_{1.2}Ni_{0.54}Co_{0.13}Mn_{0.13}O₂, Li_{1.2}Ni_{0.32}Co_{0.004}Mn_{0.476}O₂, and the like.

In some embodiments, the first active material is a mixture of a lithium transition metal oxide and manganate. For example, it is a mixture of LiNi_{0.6}Co_{0.2}Mn_{0.2}O₂ and LiMn₂O₄, and the ratio of the two may be set according to actual requirements.

In the embodiments of the present application, during a charge and discharge process of the battery cell (a charge and discharge voltage may be 2V to 5V), the content of lithium ions may change accordingly due to deintercalation and consumption of lithium ions or the like. When the battery cell is in different charge or discharge states, the molar content of lithium ions is different. Similarly, the content of oxygen ions and other ions may also change due to various circumstances. Therefore, general formulas of the olivine structure material, the spinel structure material, and the layered structured material measured from the positive electrode plate of the battery cell may be different from the general formulas given above. For example, for LiCoO₂, the measured general formula may be Li₁₊ᵤCoO₂₊ᵣ, where u is a number less than 0 and r is a number less than 0.

In some embodiments, based on the total weight of the third film layer 13, a weight percentage of the binder in the third film layer 13 is 1wt% to 20wt%, for example, 1wt%, 5wt%, 10wt%, 20wt%, or any value within the above range.

When the weight percentage of the binder in the third film layer 13 is not greater than 20wt%, the third film layer 13 has a relatively appropriate porosity, an electrolyte absorption rate of the third film layer 13 is appropriate, and electrolyte solution absorption time of the positive electrode plate 1 is appropriate, which is beneficial to improving a liquid absorption rate of the positive electrode plate and is beneficial to improving production efficiency of the battery cell.

When the weight percentage of the binder in the third film layer 13 is not less than 1wt%, it is beneficial to improving bonding power between the third film layer 13 and each of the first film layer 11 and the second film layer 12, and is beneficial to reducing a risk of deformation and wrinkling of the positive electrode plate.

Optionally, based on the total weight of the third film layer 13, a weight percentage of the binder in the third film layer 13 is 5wt% to 15wt%. In this way, it is beneficial to bonding between the third film layer 13 and each of the first film layer 11 and the second film layer 12, and the possibility of a gap between the third film layer 13 and each of the first film layer 11 or the second film layer 12 may be reduced, thereby reducing the risk of deformation and wrinkling of the positive electrode plate 1.

In some embodiments, based on the total weight of the third film layer 13, a weight percentage of the conductive agent in the third film layer 13 is 10wt% to 80wt%, for example, 10wt%, 20wt%, 50wt%, 80wt%, or any value within the above range.

When the mass ratio of the conductive agent in the third film layer 13 to the third film layer 13 is not less than 20wt%, the third film layer 13 has a certain conductivity, which is beneficial to increasing electrical contact between the first film layer 11 and the second film layer 12, and the battery cell has low internal resistance. When the mass ratio of the conductive agent in the third film layer 13 to the third film layer 13 is not greater than 80wt%, it is beneficial to reduce the mass of the third film layer 13, thereby being beneficial to improving the energy density of the battery cell.

Optionally, based on the total weight of the third film layer 13, a weight percentage of the conductive agent in the third film layer 13 is 40wt% to 60wt%. In this way, electrons are effectively conducted between the first film layer 11 and the third film layer 13, thereby reducing polarization of the battery cell and meanwhile improving the energy density of the battery cell.

In some embodiments, a thickness d3 of the third film layer 13 is 1 µm to 10 µm, for example, 1 µm, 3 µm, 5 µm, 7 µm, 10µm, or any value within the above range.

When the thickness d3 of the third film layer 13 is not less than 1 µm, it is beneficial to isolating the first active material from the second active material, and improving an isolation effect between the first active material and the second active material. When the thickness d3 of the third film layer 13 is not greater than 10 µm, it is beneficial to reducing the thickness of the positive electrode plate 1, thereby being beneficial to improving the energy density of the battery cell.

Optionally, the thickness d3 of the third film layer 13 is 3 µm to 7 µm. In this way, it is beneficial to improving the isolation effect between the first active material and the second active material, and may also reduce reduction in the energy density of the battery cell caused by an excessive thickness of the third film layer 13.

In some embodiments, a thickness d1 of the first film layer 11 is 40 µm to 160 µm, for example, 40 µm, 50 µm, 60 µm, 80 µm,120 µm, 140µm, 160 µm, or any value within the above range.

When the thickness d1 of the first film layer 11 is not less than 40 µm, since the first active material has a relatively high gram volume, the relatively thick first film layer 11 is beneficial to improving the energy density of the battery cell. When the thickness d1 of the first film layer 11 is not greater than 160 µm, under the condition that the size of the battery cell is constant, more space can be provided for the second film layer 12, which is beneficial to improving the reliability of the battery cell.

In this embodiment, the thickness d1 of the first film layer 11 is 40 µm to 160 µm, which is beneficial to giving consideration to the reliability and the energy density of the battery cell.

The thicknesses of the first film layer 11, the third film layer 13, and the second film layer 12 may be measured by a scanning electron microscope (SEM). For example, the positive electrode plate may be cut by means of liquid nitrogen brittle fracture, ion cutting or the like. A cross section of the positive electrode plate is photographed using the scanning electron microscope to obtain the thicknesses of the first film layer 11, the third film layer 13, and the second film layer 12.

Optionally, the thickness d1 of the first film layer 11 is 60 µm to 140 µm. In this way, it is beneficial to further giving consideration to the reliability and the energy density of the battery cell.

In some embodiments, a thickness d2 of the second film layer 12 is 40 µm to 160 µm, for example, 40 µm, 50 µm, 60 µm, 80 µm,120 µm, 140µm, 160 µm, or any value within the above range.

When the thickness d2 of the second film layer 12 is not less than 40 µm, since the second active material has relatively high stability, the rellatively thick second film layer 12 is beneficial to improving the reliability of the battery cell. When the thickness d2 of the second film layer 12 is not greater than 160 µm, the second film layer 12 occupies suitable space, and under the condition that the size of the battery cell is limited, more space is provided for the first film layer 11, which is beneficial to improving the energy density of the battery cell.

In this embodiment, the thickness d2 of the second film layer 12 is 40 µm to 160 µm, which is beneficial to giving consideration to the reliability and the energy density of the battery cell.

Optionally, the thickness d2 of the second film layer 12 is 60 µm to 140 µm. In this way, it is beneficial to further giving consideration to the reliability and the energy density of the battery cell.

In the embodiments of the present application, the thicknesses of the first film layer 11 and the second film layer 12 may be set according to actual requirements, as long as the thicknesses are within the above proper ranges.

In some embodiments, based on a total weight of the first film layer 11, a weight percentage of the first active material is 90wt% to 98wt%, for example, 90wt%, 96wt%, 97wt%, 98wt%, 99wt%, or any value within the above range, and optionally 96wt% to 97wt%; and/or, based on a total weight of the second film layer 12, a weight percentage of the second active material is 90wt% to 98wt%, and optionally 96wt% to 97wt%.

When the mass ratio of the first active material to the first film layer 11 is not less than 90wt%, it is beneficial to improving the energy density of the battery cell. When the mass ratio of the first active material to the first film layer 11 is not greater than 98wt%, a conductive agent, a binder, and the like may be added into the first film layer 11, which is beneficial to improving conductivity of the first film layer 11 and bonding power between the first film layer 11 and the positive electrode current collector 10 or the third film layer 13.

In this embodiment, properly setting the mass ratio of the first active material to the first film layer 11 is beneficial to improving comprehensive performance of the first film layer 11, and is beneficial to balancing the energy density and reliability of the battery cell as well as the conductivity and bonding power of the first film layer 11.

Similarly, properly setting the mass ratio of the second active material to the second film layer 12 is beneficial to improving comprehensive performance of the second film layer 12, and is beneficial to balancing the energy density and reliability of the battery cell and conductivity and bonding power of the second film layer 12.

In some embodiments, based on the total weight of the first film layer 11, a weight percentage of the conductive agent in the first film layer 11 is 0.1wt% to 1wt%, for example, 0.1wt%, 0.2wt%, 0.3wt%, 0.6wt%, 1wt%, or any value within the above range, and optionally 0.3wt% to 0.6wt%; and/or, based on the total weight of the second film layer 12, a weight percentage of the conductive agent in the second film layer is 0.1wt% to 1wt%, and optionally 0.3wt% to 0.6wt%.

When the mass ratio of the conductive agent in the first film layer 11 to the first film layer 11 is not less than 0.1wt%, it is beneficial to improving the conductivity of the first film layer 11. When the mass ratio of the conductive agent in the first film layer 11 to the first film layer 11 is not greater than 1wt%, more first active material or binder may be added into the first film layer 11, which is beneficial to improving bonding performance of the first film layer 11 or the energy density and reliability of the battery cell.

When the mass ratio of the conductive agent in the second film layer 12 to the second film layer 12 is not less than 0.1wt%, it is beneficial to enhancing the conductivity of the second film layer 12. When the mass ratio of the conductive agent in the second film layer 12 to the second film layer 12 is not greater than 1wt%, more second active material or binder may be added into the second film layer 12, which is beneficial to improving bonding performance of the second film layer 12 or the energy density of the battery cell.

In this embodiment, properly setting the content of the conductive agent in the first film layer 11 is beneficial to giving consideration to the conductivity and bonding performance of the first film layer 11 as well as the energy density and reliability of the battery cell. Properly setting the content of the conductive agent in the second film layer 12 is beneficial to giving consideration to the conductivity and bonding performance of the second film layer 12 as well as the energy density of the battery cell.

In the embodiments of the present application, the content of the conductive agent and the binder in the first film layer 11 and the second film layer 12 may be set according to actual requirements, as long as the settings satisfy the above reasonable ranges.

In some embodiments, the conductive agent includes at least one of superconducting carbon, conductive carbon black, Ketjen black, carbon dots, and carbon fibers. In this way, a type of the conductive agent can be flexibly selected according to actual conditions.

In some embodiments, based on the total weight of the first film layer 11, a weight percentage of the binder in the first film layer 11 is 1wt% to 2wt%, for example, 1wt%, 1.2wt%, 1.3wt%, 1.6wt%, 2wt%, or any value within the above range, and optionally 1.2wt% to 1.4wt%; and/or, based on the total weight of the second film layer 12, a weight percentage of the binder in the second film layer 12 is 1wt% to 2wt%, and optionally 1.2wt% to 1.4wt%.

When the mass ratio of the binder in the first film layer 11 to the first film layer 11 is not less than 1wt%, it is beneficial to enhancing the bonding performance of the first film layer 11. When the mass ratio of the binder in the first film layer 11 to the first film layer 11 is not greater than 2wt%, more first active material or conductive agent may be added into the first film layer 11, which is beneficial to improving the conductivity of the first film layer 11 or the energy density and reliability of the battery cell.

When the mass ratio of the binder in the second film layer 12 to the second film layer 12 is not less than 1wt%, it is beneficial to enhancing the bonding performance of the second film layer 12. When the mass ratio of the binder in the second film layer 12 to the second film layer 12 is not greater than 2wt%, more second active material or conductive agent may be added into the second film layer 12, which is beneficial to improving the conductivity of the second film layer 12 or the energy density of the battery cell.

In this embodiment, properly setting the content of the binder in the first film layer 11 is beneficial to improving bonding power between the first film layer 11 and the second film layer 12 or the positive electrode current collector 10, and reducing a risk of wrinkling of the positive electrode plate, and meanwhile, is further beneficial to giving consideration to the conductivity of the first film layer 11 and the energy density and reliability of the battery cell. Properly setting the content of the binder in the second film layer 12 is beneficial to improving bonding power between the second film layer 12 and the third film layer 13, and reducing a risk of wrinkling of the positive electrode plate, and meanwhile, is further beneficial to giving consideration to the conductivity of the second film layer 12 or the energy density of the battery cell.

In some embodiments, the binder includes: at least one of polyvinylidene fluoride, styrene polybutadiene rubber, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, vinylidene fluoride-hexafluoropropylene copolymer, vinylidene fluoride-trichloroethylene copolymer, fluorine-containing acrylic resin, polyacrylonitrile, polyvinyl pyrrolidone, polyvinyl acetate, polyethylene-co-vinyl acetate, polyethylene oxide, and polyarylate. In this way, a type of the binder can be flexibly selected according to actual conditions.

### [Preparation method for positive electrode plate]

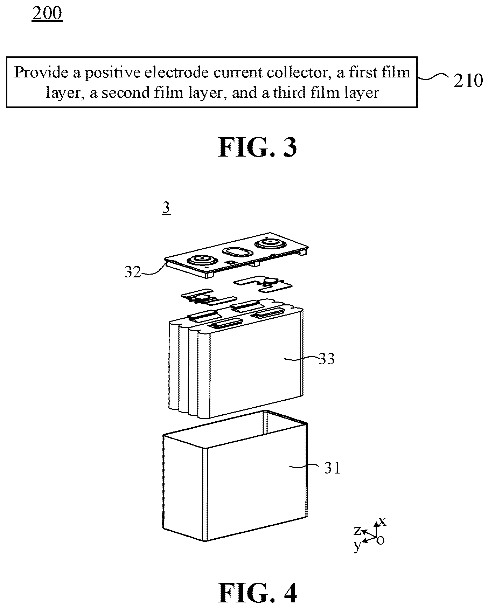

FIG. 3 is a preparation method for a positive electrode plate according to an embodiment of the present application. As shown in FIG. 3, a method 200 includes steps as follows.

Step 210: Provide a positive electrode current collector 10, a first film layer 11, a second film layer 12, and a third film layer 13. The third film layer 13 is located between the first film layer 11 and the second film layer 12. The first film layer 11 is located on a surface of at least one side of the positive electrode current collector 10 and is closer to the positive electrode current collector 10 than the second film layer 12. The first film layer 11 includes a first active material. The first active material includes a layered structure material. The second film layer 12 includes a second active material. The second active material includes at least one of an olivine structure material and a spinel structure material. The third film layer 13 is used for isolating the first active material from the second active material.

A positive electrode plate 1 prepared by the method is beneficial to improving the performance of a battery cell when applied to the battery cell.

### [Battery cell]

The present application provides a battery cell, including the positive electrode plate in the above embodiment.

A shape of the battery cell is not particularly limited in the present application, and the battery cell may be a cylinder, a square, or any other shape.

FIG. 4 is a schematic diagram of a battery cell according to an embodiment of the present application. As shown in FIG. 4, the battery cell 3 includes a housing 31, a cover plate 32, and an electrode assembly 33 arranged in the housing 31.

The electrode assembly 33 may be made of the positive electrode plate of the present application, a negative electrode plate and a separator through a winding process or a lamination process.

Optionally, the battery cell 3 further includes an electrolyte. The electrolyte may be solid, semi-solid or liquid, which is not specifically limited in embodiments of the present application.

In some embodiments, battery cells may be assembled into a battery module. The quantity of the battery cells included in the battery module may be one or a plurality, and the specific quantity may be selected by those skilled in the art according to application and capacity of the battery module.

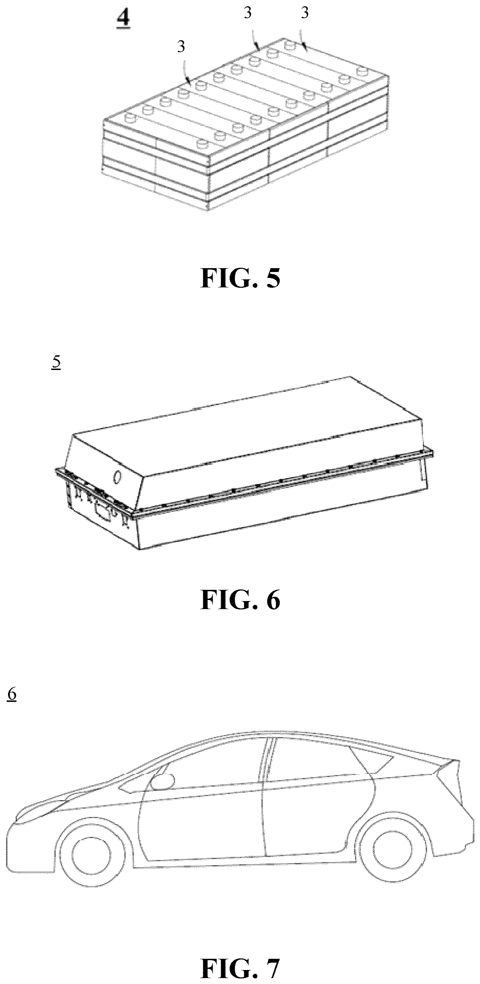

FIG. 5 is a schematic diagram of a battery module according to an embodiment of the present application. Referring to FIG. 5, in the battery module 4, a plurality of battery cells 3 may be arranged in sequence along a length direction of the battery module 4. Certainly, any other arrangement is also possible. Furthermore, the plurality of battery cells 3 may be fixed by fasteners.

Optionally, the battery module 4 may further include a shell having an accommodating space, and the plurality of battery cells 3 are accommodated in the accommodating space.

### [Battery]

The present application provides a battery, including the battery cell according to the above embodiment.

FIG. 6 is a schematic diagram of a battery according to an embodiment of the present application. As shown in FIG. 6, the present application provides a battery 5, including the battery cell 3 according to any one of the above embodiments.

The battery cells 3 may directly form a battery 5, or may form battery modules first, and then the plurality of battery modules form a battery 5.

### [Electrical apparatus]

The present application provides an electrical apparatus, including the battery according to the above embodiment.

FIG. 7 is a schematic diagram of an electrical apparatus according to an embodiment of the present application. As shown in FIG. 7, the present application provides an electrical apparatus 6, including the battery 5 according to the above embodiment.

Optionally, the electrical apparatus may alternatively be a lighting apparatus, an energy storage apparatus, a spacecraft, or the like. The electrical apparatus in the embodiments of the present application includes, but is not limited to these.

Examples of the present application are described below. The Examples described below are illustrative and only used to explain the present application, and cannot be construed as limiting the present application. In Examples in which no specific technologies or conditions are specified, technologies or conditions described in the literature in the art or product specifications are followed. Where manufacturers are not specified, the employed reagents or instruments are all commercially available conventional products.

### [Examples]

### Example 1

The structure of a positive electrode plate in Example 1 may refer to FIG. 1. In Example 1, the positive electrode current collector 10 is aluminum foil. The thickness d1 of the first film layer 11 is 120 µm. The thickness d2 of the second film layer 12 is 80 µm. The thickness d3 of the third film layer 13 is 6 µm.

In the first film layer 11, the first active material is LiNi_{0.6}Co_{0.2}Mn_{0.2}O₂ (also referred to as NCM622). The first film layer 11 further includes a conductive agent carbon black, and a binder PVDF.

Based on a total weight of the first film layer 11, a weight percentage of the first active material is 97wt%, a weight percentage of the conductive agent is 1wt%, and a weight percentage of the binder is 2wt%.

In the second film layer 12, the second active material is LiFePO₄ with a carbon coating layer (also referred to as LFP). The second film layer 12 further includes the conductive agent carbon black, and the binder PVDF. Based on a total weight of the second film layer 12, a weight percentage of the second active material is 97wt%, a weight percentage of the conductive agent is 1wt%, and a weight percentage of the binder is 2wt%.

The third film layer 13 includes the binder PVDF, the conductive agent carbon black, and an oxygen-absorbing material in a mass ratio of 10:40:50. In Example 1, the oxygen-absorbing material is a porous material carbon molecular sieve (CMS). The porous material has a porosity a1 of 80%, and a specific surface area a2 of 3000m²/g. Based on a total weight of the third film layer 13, a weight percentage a3 of the porous material is 50wt%.

### Examples 2-6

Examples 2-6 differ from Example 1 in that the porous material has different porosity a1 and specific surface area a2.

In Examples 2-6, a1 is 60, 70, 77, 90, and 95, respectively. a2 is 1000, 2000, 2800, 4500, and 5000, respectively.

### Examples 7-10

Examples 7-10 differ from example 1 in that the mass ratio a3 of the porous material to the third film layer 13 is different.

In Examples 7-10, a3 is 10wt%, 30wt%, 60wt%, and 80wt%, respectively. Correspondingly, mass proportions of the binder and the conductive agent in the third film layer 13 vary with a change in a proportion of the porous material. Details are shown in Table 1.

### Examples 11-13

Examples 11-13 differ from Example 1 in that the mass ratio a4 of the binder in the third film layer 13 to the third film layer 13 is different.

In Examples 11-13, a4 is 15wt%, 20wt%, and 1wt%, respectively.

### Examples 14-17

Examples 14-17 differ from Example 1 in that the thicknesses of the third film layer 13 is different.

In Examples 14-17, the thicknesses d3 of the third film layer 13 are 1µm, 3µm, 7µm, and 10µm, respectively.

### Examples 18-19

Examples 18-19 differ from Example 1 in that the oxygen-absorbing material is different. In Examples 17-18, the oxygen-absorbing materials are a zeolite molecular sieve and activated carbon, respectively.

### Examples 20-21

Examples 20-21 differ from Example 1 in that the oxygen-absorbing material is different. In Example 20, the oxygen-absorbing material is butylated hydroxyanisole (BHA). In Example 21, the oxygen-absorbing material is naphthylamine.

### Examples 22-23

Examples 22-23 differ from Example 1 in that the first active material and the second active material are different. In Example 22, the first active material is LiNi_{0.6}Co_{0.2}Mn_{0.2}O₂, and the second active material is LiMn₂O₄. In Example 23, the first active material is Li_{1.2}Ni_{0.54}Co_{0.13}Mn_{0.13}O₂ (also referred to as LRNCM), and the second active material is LiFePO₄.

### Example 24

Example 24 differs from Example 1 in that no oxygen-absorbing material is arranged in the third film layer 13.

In Examples 1-24, the mass ratio of the first active material to the conductive agent to the binder in the first film layer 11 is 97:1:2. The mass ratio of the second active material to the conductive agent to the binder in the second film layer 12 is 97:1:2.

### Comparative Example 1

Comparative Example 1 differs from Example 1 in that a structure in which the first film layer and the second film layer are arranged in different layers is not used, and no third film layer is arranged.

In Comparative Example 1, LiFePO₄ and LiNi_{0.6}Co_{0.2}Mn_{0.2}O₂ are mixed in a mass ratio of 1:1, and the conductive agent carbon black, the binder PVDF, and N-methylpyrrolidone (NMP) are added to prepare a positive electrode active slurry, which is coated on aluminum foil and dried to form a film layer with a thickness of 200 µm. The mass ratio of the active material to the conductive agent to the binder is 97:1:2.

### Comparative Example 2

Comparative Example 2 differs from Comparative Example 1 in that a structure in which the first film layer and the second film layer are arranged in different layers is used, but no third film layer is arranged for isolating the first active material from the second active material.

In Table 1 and Table 2, a1 represents a porosity of the oxygen-absorbing material, a2 represents a specific surface area of the oxygen-absorbing material, a3 represents the mass ratio of the oxygen-absorbing material to the third film layer 13, a4 represents the mass ratio of the binder in the third film layer 13 to the third film layer 13, a5 represents the mass ratio of the conductive agent in the third film layer 13 to the third film layer 13, d3 represents a thickness of the third film layer 13, Q1 represents a capacity retention rate of the battery cell after 500 cycles at 25°C, Q2 represents a capacity retention rate of the battery cell after 500 cycles at 45°C, Q3 represents volume energy density of the battery cell, and V1 represents a volume change rate caused by gas production in the battery cell after storage at 60°C for 60 days.

**Table 1 Experimental Data for Examples and Comparative Examples**

| | d3/ µm | Type of oxygen-absorbing material | a1/ % | a2/m²/ g | a3/ % | a4/ % | a5/ % | V1/% | Q1/% | Q2/% | Q3/Wh/ L |
|---|---|---|---|---|---|---|---|---|---|---|---|
| Example 1 | 6 | CMS | 80 | 3000 | 50 | 10 | 40 | 16.40 | 91.86 | 80.47 | 491.02 |
| Example 2 | 6 | CMS | 60 | 1000 | 50 | 10 | 40 | 19.31 | 88.26 | 79.64 | 493.97 |
| Example 3 | 6 | CMS | 70 | 2000 | 50 | 10 | 40 | 18.25 | 89.17 | 80.29 | 494.02 |
| Example 4 | 6 | CMS | 77 | 2800 | 50 | 10 | 40 | 17.18 | 91.88 | 80.34 | 498.54 |
| Example 5 | 6 | CMS | 90 | 4500 | 50 | 10 | 40 | 15.49 | 92.31 | 80.59 | 489.13 |
| Example 6 | 6 | CMS | 95 | 5000 | 50 | 10 | 40 | 13.37 | 92.46 | 80.81 | 483.28 |
| Example 7 | 6 | CMS | 80 | 3000 | 10 | 10 | 80 | 24.94 | 83.30 | 74.68 | 475.23 |
| Example 8 | 6 | CMS | 80 | 3000 | 30 | 10 | 60 | 20.59 | 82.59 | 75.74 | 471.43 |
| Example 9 | 6 | CMS | 80 | 3000 | 60 | 10 | 30 | 15.49 | 92.03 | 80.82 | 489.67 |
| Example 10 | 6 | CMS | 80 | 3000 | 80 | 10 | 10 | 11.25 | 87.23 | 76.83 | 470.30 |
| Example 11 | 6 | CMS | 80 | 3000 | 50 | 15 | 35 | 16.69 | 91.41 | 80.29 | 493.94 |
| Example 12 | 6 | CMS | 80 | 3000 | 50 | 20 | 30 | 16.70 | 91.40 | 81.02 | 490.01 |
| Example 13 | 6 | CMS | 80 | 3000 | 50 | 1 | 49 | 14.38 | 85.48 | 74.56 | 453.94 |
| Example 14 | 1 | CMS | 80 | 3000 | 50 | 10 | 40 | 25.65 | 81.52 | 72.41 | 475.23 |
| Example 15 | 3 | CMS | 80 | 3000 | 50 | 10 | 40 | 21.95 | 83.42 | 76.04 | 490.15 |
| Example 16 | 7 | CMS | 80 | 3000 | 50 | 10 | 40 | 15.03 | 91.93 | 80.67 | 487.15 |
| Example 17 | 10 | CMS | 80 | 3000 | 50 | 10 | 40 | 11.66 | 88.12 | 76.93 | 465.86 |
| Example 18 | 6 | Zeolite molecular sieve | 80 | 3000 | 50 | 10 | 40 | 18.50 | 90.36 | 78.16 | 489.11 |
| Example 19 | 6 | Activated carbon | 80 | 3000 | 50 | 10 | 40 | 17.90 | 89.88 | 76.93 | 490.15 |
| Example 20 | 6 | BHA | / | / | 50 | 10 | 40 | 16.87 | 91.88 | 80.61 | 483.67 |
| Example 21 | 6 | Naphthylamine | / | / | 50 | 10 | 40 | 16.53 | 91.00 | 80.12 | 482.51 |
| Example 22 | 6 | CMS | 80 | 3000 | 50 | 10 | 40 | 11.66 | 85.48 | 76.31 | 470.91 |
| Example 23 | 6 | CMS | 80 | 3000 | 50 | 10 | 40 | 23.14 | 86.05 | 76.88 | 505.02 |
| Example 24 | 6 | / | / | / | / | 10 | 90 | 27.02 | 80.83 | 72.41 | 446.72 |
| Comparative Example 1 | / | / | / | / | / | / | / | 43.18 | 72.70 | 68.34 | 393.93 |
| Comparative Example 2 | / | / | / | / | / | / | / | 30.27 | 75.11 | 70.84 | 430.60 |

### [Preparation of battery cell]

### (1) Preparation of a positive electrode plate

Prepare a slurry of a first film layer: A first active material, a conductive agent, a binder, and NMP were mixed, and stirred to form the slurry. Prepare a slurry of a second film layer: A second active material, the conductive agent, the binder, and the NMP were mixed, and stirred to form the slurry. Prepare a slurry of a third film layer: The conductive agent, the binder, an oxygen-absorbing material (the oxygen-absorbing material is not added in Example 24) and water were mixed, and stirred to form the slurry.

Types and proportions of various materials of the slurries of the first film layer, the third film layer, and the second film layer are shown in Table 1 and Table 2.

The slurry of the first film layer, the slurry of the third film layer, and the slurry of the second film layer were coated on a surface of a positive electrode current collector aluminum foil using an extrusion coating apparatus, and subjected to oven drying and cold pressing to obtain the positive electrode plate. Thicknesses of the first film layer and the second film layer may be shown in Table 1.

### (2) Preparation of a negative electrode plate

A negative electrode active material graphite, a conductive agent acetylene black, a binder styrene butadiene rubber, and a thickener sodium carboxymethyl cellulose were mixed in a mass ratio of graphite: acetylene black: styrene butadiene rubber: sodium carboxymethyl cellulose = 95:2:2:1, an appropriate amount of deionized water was added, and full stirring and mixing were performed to form a uniform negative electrode slurry. The negative electrode slurry was coated on a negative electrode current collector copper foil, and subjected to oven drying and cold pressing to obtain the negative electrode plate.

### (3) Preparation of an electrolyte solution

In an argon atmosphere glove box with a water content of <10ppm, one or more solvents were mixed in a weight ratio to obtain a mixed solvent, a certain mass of fully dried lithium salt LiPF₆ was dissolved in the above mixed solvent, then an inorganic lithium salt additive was added thereto, and the electrolyte solution was obtained after full stirring.

### (4) Preparation of a battery cell

A positive electrode plate, a separator and a negative electrode plate were stacked in sequence, so that the separator was positioned between the positive electrode plate and the negative electrode plate to play a role in separation, and were then wound to obtain an electrode assembly. The electrode assembly was placed in a housing, the electrolyte solution prepared as described above was injected into the housing, and then subjected to vacuum packaging, standing, formation, shaping, and other processes to obtain the battery cell.

### [Determination of a first active material and a second active material]

A certain mass of an active material layer was taken to prepare a sample by grinding, pressing, and the like. An X-ray diffraction instrument was used for scanning at 5°/min within a range of 10-80°, and a scanning result is compared with characteristic peaks of corresponding materials to determine a type of the active material.

### [Testing for cycling performance]

At 25/ 45°C, the battery cell was charged at a constant current of 1 C to a voltage of 4.4 V, further charged at a constant voltage of 4.4 V until the current is 0.05 C, and then discharged at a constant current of 1 C to a voltage of 2.5 V. This was one charge and discharge cycling process. A discharge capacity at this time was a discharge capacity of the battery at the first cycle. The battery was subjected to a plurality of cycle charge and discharge tests in the above manner. The discharge capacity of the 200th cycle was detected, and a capacity retention rate of the battery cell after the cycles was calculated through the following formula. Capacity retention rate of the battery after 200 cycles = [discharge capacity of the 200th cycle/discharge capacity of the first cycle]×100wt%.

After the tests were completed, the battery cells were disassembled in a drying room, the electrode assembly was taken out, and the positive electrode plate was unfolded from an outer circle in sequence according to the quantity of folds, to observe whether the positive electrode plate wrinkled. The positive electrode plate in the example did not wrinkle.

### [Testing for specific surface area]

A specialized sample tube was used for taking an appropriate amount of sample. The sample was heated, and evacuated to a vacuum for degassing for 2 h, and was weighed after cooling to room temperature, minus the mass of the sample tube to obtain the mass of the sample. The sample tube was loaded into a nitrogen adsorption and desorption instrument, and an adsorption amount of a gas on a solid surface was measured at a constant low temperature under different adsorption pressures, to obtain a monolayer adsorption amount of the sample based on an adsorption theory of multi-molecular layers (BET theory) and formulas, and then, a specific surface area per unit mass of the solid sample was calculated.

### [Testing for porosity]

A certain weight of sample was weighted, true density and apparent density of the material were measured, and a porosity was calculated based on the true density and apparent density.

### [Testing for energy density]

At room temperature (25°C± 2°C), after discharging to a lower limit voltage of 2.5V in a constant-current discharging manner (1/3C rate), the battery cell was standing for 30 minutes, and then was further standing for 30 minutes after being charged to an upper limit cut-off voltage of 4.4V in a constant-current and constant-voltage charging manner (charging to 1/20C at a constant current of 1/3C and a constant voltage); and then discharge energy E (in Wh) was calculated. This process was repeated for 3 times. An average value of the discharge energy E of 3 times is calculated, and divided by a volume V of the battery cell, and then volume energy density (in Wh/L) = E_{average} / V.

### [Testing for volume expansion rate]

At 60°C, a battery was charged to 4.4V at a constant current of 0.5C. After the battery was fully charged, the initial volume of the battery was tested using a drainage method. The battery was stored in an oven at 60°C for 60 days, and then taken out. The battery was standing for 60 minutes at room temperature. The volume of the battery was tested using the drainage method within 60 minutes after cooling to room temperature. A volume expansion rate of the battery was calculated based on the battery volume tested before storage. The volume expansion rate (%) of the battery after storage for 60 days at 60 °C = (battery volume measured after storage/ battery volume measured before storage)-1.

As shown in Examples 1-24 and Comparative Examples 1-2, arranging a third film layer between the first film layer and the second film layer may improve early capacity attenuation of the battery cell, which is beneficial to improving cycling performance of the battery cell, thereby being beneficial to enhancing the performance of the battery cell.

As shown in Examples 2-6, properly setting the porosity and specific surface area of the oxygen-absorbing material is beneficial to reducing capacity attenuation in an early stage of the cycle and improving the cycling performance of the battery cell. When the porosity and specific surface area exceed a certain range, the porous material may consume the electrolyte solution, which may lead to insufficient electrolyte solution at the end of the cycle and then lead to performance deterioration of the battery cell. When the porosity and specific surface area of the oxygen-absorbing material are too small, it is difficult to effectively absorb oxygen in a lower layer, which easily causes escape of the oxygen, so that the cycling performance of the battery is not significantly improved, and meanwhile, the energy density is slightly reduced. As shown in Examples 7-10, properly setting the content of the oxygen-absorbing material in the third film layer is beneficial to reducing a volume change rate. As shown in Examples 9 and 10, properly setting the content of the oxygen-absorbing material in the third film layer is beneficial to properly setting the content of the conductive agent in the third film layer, and is beneficial to reducing the volume change rate while reducing polarization of the battery cell, thereby maintaining relatively high volume energy density. As shown in Examples 11-13, properly setting the content of the binder in the third film layer may reduce a risk of deformation and wrinkling of an electrode plate. As shown in Examples 14-17, properly setting the thickness of the third film layer is beneficial to improving the cycling performance of the battery cell while maintaining relatively high energy density. As shown in Examples 18-21, the technical solutions of the embodiments of the present application may be applied to a variety of different oxygen-absorbing materials. As shown in Examples 22-23, the technical solutions of the embodiments of the present application may use different first active material and second active material. As shown in Example 24, no oxygen-absorbing material is arranged in the third film layer, which is also beneficial to improving the cycling performance of the battery cell.

It needs to be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A positive electrode plate, comprising: a positive electrode current collector (10), a first film layer (11), a second film layer (12), and a third film layer (13);
wherein the third film layer (13) is located between the first film layer (11) and the second film layer (12), and the first film layer (11) is located on a surface of at least one side of the positive electrode current collector (10) and is closer to the positive electrode current collector (10) than the second film layer (12);
the first film layer (11) comprises a first active material, and the first active material comprises a layered structure material;
the second film layer (12) comprises a second active material, and the second active material comprises at least one of an olivine structure material and a spinel structure material; and
the third film layer (13) is used for isolating the first active material from the second active material.

2. The positive electrode plate according to claim 1, wherein the third film layer (13) comprises a conductive agent and a binder.

3. The positive electrode plate according to claim 1 or 2, wherein the third film layer (13) comprises an oxygen-absorbing material, and the oxygen-absorbing material is used for absorbing oxygen generated by the first active material.

4. The positive electrode plate according to claim 3, wherein the oxygen-absorbing material comprises a porous material, and the porous material has a porosity of 60% to 95% and a specific surface area of 1000 m²/g to 5000 m²/g; optionally, the porous material has a porosity of 70% to 80%, and a specific surface area of 2000 m²/g to 4000 m²/g.

5. The positive electrode plate according to claim 4, wherein the porous material comprises: at least one of a carbon-based material and a molecular sieve material; optionally, the carbon-based material comprises: activated carbon; and optionally, the molecular sieve material comprises: at least one of a carbon molecular sieve, a zeolite molecular sieve, and a silicon-titanium molecular sieve.

6. The positive electrode plate according to claim 3, wherein the oxygen-absorbing material comprises: at least one of a phenolic antioxidant and an amine antioxidant; optionally, the phenolic antioxidant comprises at least one of butylated hydroxyanisole, butylated hydroxytoluene, propyl gallate, and tert-butylhydroquinone; optionally, the amine antioxidant comprises at least one of naphthylamine, diphenylamine, and p-phenylenediamine.

7. The positive electrode plate according to any one of claims 3-6, wherein based on a total weight of the third film layer (13), a weight percentage of the oxygen-absorbing material is 10wt% to 80wt%, and optionally 30wt% to 60wt%.

8. The positive electrode plate according to any one of claims 1-7, wherein the olivine structure material comprises a lithium-containing phosphate with an olivine structure; optionally, the lithium-containing phosphate with the olivine structure comprises Li_{c}Fe_{d}M¹_{1-d}P₁₋ₘO₄₋ₙ, wherein 0≤c≤1.1, 0.3≤d≤1, 0≤m≤0.1, and 0≤n≤0.1, and M¹comprises at least one of Mn, Al, Cu, Mg, Zn, Ni, Ti, V, Zr, Co, Ga, Sn, Sb, Nb, and Ge; and optionally, the Li_{c}Fe_{d}M¹_{1-d}P₁₋ₘO₄₋ₙcomprises at least one of LiFePO₄, LiMnPO₄, and LiFe_{0.5}Mn_{0.5}PO₄.

9. The positive electrode plate according to any one of claims 1-8, wherein the spinel structure material comprises at least one of LiMn₂O₄ and LiNiₑMn₂₋ₑO₄, wherein 0<e<2.

10. The positive electrode plate according to any one of claims 1-9, wherein the layered structure material comprises a lithium transition metal oxide with a layered structure; optionally, the lithium transition metal oxide comprises at least one of LiCoO₂, LiMnO₂, LiNiO₂, LiₐNiₓCo_{y}M²_{1-x-y}O_{2+b}, nLi₂MnO₃·(1-n)LiM³O₂, wherein 0.5≤x<1.0, 0≤y< 0.5, x+y<1, 0.2≤a≤1.2, -0.02≤b< 0.02, 0<n<1, M² comprises at least one of Mn, Zr, Al, B, Ta, Mo, W, Nb, Sb, and La, and M³ includes at least one of Co, Ni, and Mn. Optionally, the lithium transition metal oxide includes at least one of LiNi_{0.6}Co_{0.2}Mn_{0.2}O₂, LiNi_{0.5}Co_{0.2}Mn_{0.3}O₂, and Li_{1.2}Ni_{0.54}Co_{0.13}Mn_{0.13}O₂.

11. The positive electrode plate according to any one of claims 1-10, wherein based on a total weight of the third film layer (13), a weight percentage of the binder in the third film layer is 1wt% to 20wt%, and optionally 5wt% to 15wt%.

12. The positive electrode plate according to any one of claims 1-11, wherein based on the total weight of the third film layer (13), a weight percentage of the conductive agent in the third film layer is 10wt% to 80wt%, and optionally 40wt% to 60wt%.

13. The positive electrode plate according to any one of claims 1-12, wherein a thickness d3 of the third film layer is 1 µm to 10 µm, and optionally 3 µm to 7 µm.

14. The positive electrode plate according to any one of claims 1-13, wherein a thickness d1 of the first film layer (11) is 40 µm to 160 µm, and optionally 60 µm to 140 µm.

15. The positive electrode plate according to any one of claims 1-14, wherein a thickness d2 of the second film layer (12) is 40 µm to 160 µm, and optionally 60 µm to 140 µm.

16. The positive electrode plate according to any one of claims 1-15, wherein based on a total weight of the first film layer (11), a weight percentage of the first active material is 90wt% to 98wt%, and optionally 96wt% to 97wt%;
and/or,
based on a total weight of the second film layer (12), a weight percentage of the second active material is 90wt% to 98wt%, and optionally 96wt% to 97wt%.

17. The positive electrode plate according to any one of claims 1-16, wherein based on the total weight of the first film layer (11), a weight percentage of the conductive agent in the first film layer (11) is 0.1wt% to 1wt%, and optionally 0.3wt% to 0.6wt%;
and/or,
based on the total weight of the second film layer (12), a weight percentage of the conductive agent in the second film layer (12) is 0.1wt% to 1wt%, and optionally 0.3wt% to 0.6wt%.

18. The positive electrode plate according to any one of claims 2-17, wherein the conductive agent comprises at least one of superconducting carbon, conductive carbon black, Ketjen black, carbon dots, and carbon fibers.

19. The positive electrode plate according to any one of claims 1-18, wherein based on the total weight of the first film layer (11), a weight percentage of the binder in the first film layer (11) is 1wt% to 2wt%, and optionally 1.2wt% to 1.4wt%;
and/or,
based on the total weight of the second film layer (12), a weight percentage of the binder in the second film layer (12) is 1wt% to 2wt%, and optionally 1.2wt% to 1.4wt%.

20. The positive electrode plate according to any one of claims 2-19, wherein the binder comprises: at least one of polyvinylidene fluoride, styrene polybutadiene rubber, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, vinylidene fluoride-hexafluoropropylene copolymer, vinylidene fluoride-trichloroethylene copolymer, fluorine-containing acrylic resin, polyacrylonitrile, polyvinyl pyrrolidone, polyvinyl acetate, polyethylene-co-vinyl acetate, polyethylene oxide, and polyarylate.

21. A preparation method for a positive electrode plate, comprising:
providing a positive electrode current collector (10), a first film layer (11), a second film layer (12), and a third film layer (13);
wherein the third film layer (13) is located between the first film layer (11) and the second film layer (12), and the first film layer (11) is located on a surface of at least one side of the positive electrode current collector (10) and is closer to the positive electrode current collector (10) than the second film layer (12);
the first film layer (11) comprises a first active material, and the first active material comprises a layered structure material;
the second film layer (12) comprises a second active material, and the second active material comprises at least one of an olivine structure material and a spinel structure material; and
the third film layer is used for isolating the first active material from the second active material.

22. A battery cell, comprising the positive electrode plate according to any one of claims 1 to 20.

23. A battery, comprising the battery cell according to claim 22.

24. An electrical apparatus, comprising the battery according to claim 23.
